Europäisches Patentamt

European Patent Office

Office européen des brevets

(11) Veröffentlichungsnummer: **0 192 052 B1**

(12) # EUROPÄISCHE PATENTSCHRIFT

(45) Veröffentlichungstag der Patentschrift: **12.06.91**

(51) Int. Cl.5: **G01M 15/00**, **F02B 77/08**, **F02P 17/00**

(21) Anmeldenummer: **86100600.5**

(22) Anmeldetag: **17.01.86**

(54) **Verfahren zur Laufzustandsanalyse an Verbrennungsmotoren mit elektrischer Zündanlage sowie Vorrichtung zur Durchführung des Verfahrens.**

(30) Priorität: **16.02.85 DE 3505440**

(43) Veröffentlichungstag der Anmeldung:
**27.08.86 Patentblatt 86/35**

(45) Bekanntmachung des Hinweises auf die
Patenterteilung:
**12.06.91 Patentblatt 91/24**

(84) Benannte Vertragsstaaten:
**AT CH DE FR GB IT LI NL SE**

(56) Entgegenhaltungen:
**FR-A- 1 597 723**
**FR-A- 2 255 750**
**US-A- 3 771 047**

(73) Patentinhaber: **Hermann, Horst**
**Schillerstrasse 7**
**W-8507 Oberasbach(DE)**

(72) Erfinder: **Binöder, Wilhelm**
**Albrecht-Dürer-Strasse 4b**
**W-8501 Veitsbronn(DE)**
Erfinder: **Hermann, Horst**
**Hauptstrasse 15**
**W-8507 Oberasbach(DE)**
Erfinder: **Rech, Armin**
**Hilgenbacher Höhe 13**
**W-6601 Heusweiler(DE)**
Erfinder: **Rech, Gerd**
**Schwarzenholzer Strasse 18**
**W-6601 Heusweiler(DE)**
Erfinder: **Reinhardt, Günter**
**Schreiberstrasse 11**
**W-8502 Zirndorf(DE)**

(74) Vertreter: **Richter, Bernhard, Dipl.-Ing.**
**Beethovenstrasse 10**
**W-8500 Nürnberg 20(DE)**

## Beschreibung

Die Erfindung betrifft Verfahren zur Laufzustandsanalyse an Verbrennungsmotoren mit elektrischer Zündanlage sowie deren Kombination und ferner entsprechende Vorrichtungen.

Als Stand der Technik ist es bekannt, elektronische Motortester zu verwenden, die entweder gesondert an entsprechende Anschlußklemmen des Kraftfahrzeuges angeschlossen werden oder zusammengefaßt über einen sog. Diagnosestecker mit den Fahrzeugen verbunden werden. Mit Hilfe derartiger Geräte kann eine Vielzahl von Diagnoseroutinen durchgeführt werden, beispielsweise die Messung der Drehzahl, des Schließwinkels, der Zündspannung, des Zündspannungsverlaufes, des Abgasverhaltens, des Unterdruckes u. dgl. mehr. Weiterhin ist es bereits bekannt, bei der Zündspannungsmessung oder der Messung des Zündspannungsverlaufes selektiv einzelne Zylinder auszuwerten, wozu i. d. R. stehende Oszillographenbilder herangezogen werden. Anhand dieser Oszillographenbilder kann der erfahrene Anwender Zündspannung, Brennspannung, Brenndauer, Schließwinkel und Nockenversatz einer Zündanlage feststellen. Auch Abweichungen von einem Sollwert, z.B. Zündspannungsaussetzer eines bestimmten Zylinders sind leicht erkennbar, allerdings nur dann, wenn sie periodisch wiederkehren und deshalb auch auf jedem der in schneller zeitlicher Abfolge geschriebenen Oszillogramme auftauchen. Aufgrund des veränderten, von der Norm abweichenden Zündspannungsdiagrammes kann - eine entsprechende Erfahrung des Benutzers vorausgesetzt - auch auf die Ursache des Zündaussetzers geschlossen werden.

Nachteilig an den bekannten Motortestern ist aber, daß sie nicht in der Lage sind, nur gelegentlich auftretende Abweichungen der Zündanlage von ihren Sollwerten festzustellen. Derartige Abweichungen äußern sich als Folgeerscheinung z.B. durch ein gelegentliches Schütteln bzw. Unrundlaufen des beispielsweise im Leerlauf drehenden Motors.

Der Erfindung liegt die Aufgabe zugrunde, ein Verfahren sowie eine Vorrichtung zur Durchführung des Verfahrens anzugeben, die es dem Benutzer ermöglichen, nach einer irgendwie gezeigten Normabweichung des Motorlaufs den bereits in der Vergangenheit liegenden Grund dafür festzustellen und gleichzeitig zu lokalisieren, welcher Zylinder für die Normabweichung verantwortlich war.

Diese Aufgabe wird zunächst bei einem Verfahren zur Laufzustandsanalyse an Verbrennungsmotoren mit elektrischer Zündanlage, bei welchen die Motordrehzahl elektrisch erfaßt, aufgezeichnet und ausgewertet wird, gemäß dem Anspruch 1 durch die folgenden Verfahrensschritte gelöst:

- die Drehzahl des Motors wird mit hoher zeitlicher Auflösung durch Messung des Zeitabstandes zweier aufeinander abfolgender Zündspannungsimpulse unterschiedlicher Zylinder als erster Zahlenwert erfaßt,
- parallel dazu wird durch Zählung der Anzahl der Zündimpulse ein die Zylinderkennung beinhaltender zweiter Zahlenwert erfaßt, wobei der zweite Zahlenwert bei Auftreten des Zündimpulses eines ausgewählten Zylinders jeweils auf '1' gesetzt wird,
- die Werte werden in einander zugeordneter Form digital längerfristig abgespeichert und in einem Rechner in Drehzahlwerte/Zylinder umgerechnet,
- die abgespeicherten Drehzahlwerte/Zylinder können bedarfsweise aufgerufen und dargestellt werden.

Die Lösung der vorgenannten Aufgabe kann in alternativer Weise auch durch den nebengeordneten Anspruch 9 erfolgen, der ausgehend von einem Verfahren zur Laufzustandsanalyse an Verbrennungsmotoren mit elektrischer Zündanlage dadurch gekennzeichnet ist, daß zur Erfassung von fehlerhaften Zündfolgen und/oder etwaigen Zündaussetzern der zeitliche Verlauf der Zündspannung erfaßt und abgespeichert wird, wobei der Verlauf der Zündspannung bei jedem Zündimpuls mit hoher zeitlicher Auflösung digitalisiert und als Gruppe von ersten Zahlenwerten zeitlich geordnet registriert wird, parallel dazu durch Zählung der Anzahl der Zündimpulse ein die Zylinderkennung beinhaltender zweiter Zahlenwert erfaßt wird, wobei der zweite Zahlenwert bei Auftreten des Zündimpulses eines ausgewählten Zylinders jeweils auf '1' gesetzt wird, den Gruppen von ersten Zahlenwerten werden die zweiten Zahlenwerte rechnerisch zugeordnet und beide Gruppen werden längerfristig abgespeichert, der Verlauf der durch die ersten Zahlenwerte repräsentierten Zündspannung/Zylinder kann bedarfsweise aufgerufen und zusammen mit der zugehörigen Zylinderkennnung dargestellt werden.

Weitere, sich an Anspruch 1 oder Anspruch 9 anschließende Verfahrensmaßnahmen sind in den entsprechenden Verfahrens-Unteransprüchen enthalten, auf die hiermit ausdrücklich Bezug genommen wird. Ferner wird Bezug genommen auf die den beiden Verfahrensansprüchen 1 und 9 zugeordneten Vorrichtungsansprüche. Sie umfassen die wesentlichen Merkmale, die bei einer Vorrichtung zur Durchführung des Verfahrens zweckdienlich sind. Insbesondere ist hierzu nach Anspruch 14 eine Vorrichtung vorgesehen, die dadurch gekennzeichnet ist, daß ein erster und ein zweiter Zähler vorgesehen sind, der Zähleingang des ersten Zählers mit dem Ausgang eines Frequenzgenerators und der Start-Stop-Reset-Eingang (Gate) des ersten Zählers sowie der Zähleingang des zweiten Zählers mit einem mit der Zündspule zusammenwirkenden ersten Spannungssensor verbunden sind und der Start-Stop-Reset-Eingang (Gate) des zweiten Zählers mit einem weiteren Sensor verbunden ist, der mit dem Zündkabel eines ausgewählten Zylinders zusammenwirkt, wobei bevorzugt Mittel zur Erzeugung eines elektronischen Stehbildes vorgesehen sind.

Die Erfindung macht es möglich, auch nur sporadisch auftretende Ursachen für ein Abweichen des Motorlaufes vom Normalverhaltenzu detektieren, wobei erstmalig festgestellt werden kann, welcher Zylinder die sporadisch auftretende Normabweichung zeigte und das Unrundlaufen des Motors verursachte. Dies wird verfahrensge mäß dadurch erreicht, daß nicht Motordrehzahl und Zündspannungsverlauf pro Zylinder laufend gemessen und angezeigt werden, sondern entweder die Drehzahl pro Zylinder erfaßt **und gezielt wieder abrufbar abgespeichert** wird und damit auch bereits in der Vergangenheit zurückliegende Drehzahlschwankungen sichtbar gemacht und einem bestimmten Zylinder zugeordnet werden können oder alternativ der Zündspannungsverlauf der unterschiedlichen Zylinder erfaßt und wieder abrufbar abgespeichert wird und somit bereits in der Vergangenheit liegende Zündspannungseinbrüche o. dgl. als Stehbild sichtbar gemacht werden können. Tritt beispielsweise ein Unrundlaufen des Motors auf, so hat der Benutzer die Möglichkeit, beispielsweise durch Betätigen einer Taste den Aufzeichnungsvorgang abzubrechen und in den aufgezeichneten Meßdaten gleichsam "zurückzublättern", bis er in den in digitaler Form aufgezeichneten und abgelegten Drehzahlwerten/Zylinder oder Zündspannungsverläufen/Zylinder den "Übeltäter" gefunden hat.

Die Drehzahlerfassung/Zylinder wird dadurch vollzogen, daß mit hoher zeitlicher Auflösung der Zeitabstand zweier aufeinander abfolgender Zündspannungsimpulse gemessen und als erster Zahlenwert abgespeichert wird, dem ein zweiter Zahlenwert zugeordnet wird, der eine Zylinderkennung enthält. Die im Speicher vorliegenden Wertepaare können graphisch beispielsweise als stufenförmig ausgeformte Linie dargestellt werden und geben sogleich einen Überblick darüber, welcher Zylinder in der Zündungsabfolge für das "Minus" an Antriebsleistung verantwortlich war und den Drehzahlabfall o. dgl. verursacht hat. Es liegt auch im Rahmen der Erfindung, nicht die Drehzahl/Zylinder darzustellen, sondern -ohne vorherige Umrechnung - unmittelbar die Zeit zwischenden Zündimpulsen darzustellen. Ein Ansteigen der Zeit signalisiert dann dem Benutzer, daß der zugeordnete Zylinder für den Leistungsabfall verantwortlich war. Der Benutzer hat dann die Möglichkeit, genau diesen Zylinder zu untersuchen und wird sehr schnell den tatsächlichen Grund für den Leistungsabfall finden, der entweder in der der Zündkerze vorgeschalteten Zündspannungslage, der Zündkerze selber, den Ventilen u. dgl. mehr begründet sein kann. Mit dem alternativen Verfahren hat der Benutzer die Möglichkeit, in entsprechender Weise das Zündverhalten des jeweiligen Zylinders zu analysieren. Beispielsweise zeigt sich ein Zündaussetzer durch einen starken Einbruch der errechneten Geschwindigkeit.

Zusammengefaßt besteht der Text aus zwei Teilen, nämlich einer Aufzeichnungsphase und einer Auswertungsphase. Bei der Aufzeichnungsphase wird für jeden am Motor erfolgten Zündvorgang die benötigte Zeit gemessen und abgespeichert (bis zu 8000 Werte), parallel wird mit einem zweiten Zähler der die Zylinderkennung beinhaltende Wert erfaßt, den Zünd-Zeitwerten zugeordnet und ebenfalls abgespeichert. Diese erste Phase läuft so lange, bis die Bedienungsperson nach einem Fehlverhalten des Motors die Auswertungsphase manuell einleitet, in welcher die während der Aufzeichnungsphase gespeicherten Werte in Drehzahlwerte/Zylinder umgerechnet werden und derart elektronisch aufgearbeitet werden, daß sie auf einem Bildschirm als Stehbild darstellbar sind. Bei der zylinderbezogenen Drehzahlmessung wird entweder das Klemme 1-Signal und/oder das Kilovolt-Signal als Triggerimpuls verwendet. Ein Zähler (ein 16-Bit-Zähler) zählt mit einer konstanten Frequenz von beispielsweise 400 kHz aufwärts die Zeit zwischen zwei Triggerflanken. An jeder Triggerflanke wird der Inhalt des Zählers in einem Register abgelegt und kann vom Hauptrechner verarbeitet werden. Weiterhin wird an jeder erneuten Triggerflanke der Inhalt des Zählers auf "Null" gesetzt und der Zähler erneut gestartet.

Parallel zu diesem "Zeitzählvorgang" wird in einem zweiten Zähler die Anzahl der Klemme 1-Impulse seit dem ersten Zylinder 1-Signal gezählt. Aus diesen beiden Werten erhält man nach Umrechnung des ersten Wertes Drehzahlwerte mit einer entsprechenden Zylinderzuordnung. Ein letzter Schritt ist die Umrechnung in eine graphische Darstellung. Weiterhin ist es auf an sich bekannte Weise möglich, zeitlich rückläufig immer weiter zurückliegende Wertepaare graphisch sichtbar zu machen, bis man den beispielsweise mehrere Minuten zurückliegenden Drehzahleinbruch in der graphischen Darstellung auf dem Bildschirm sieht. Gleiches gilt für immer weiter zurückliegende Zündspannungsverläufe, die alternativ auf dem Bildschirm sichtbar gemacht werden können.

Wenn im Anspruch 1 von "hoher zeitlicher Auflösung" gesprochen wird, so wird diese durch das relativ hochfrequente Zählsignal von vorteilhafter Weise 400 kHz oder höher erzielt. Damit können - sofern die Abbildungsschärfe der graphischen Darstellung dies zuläßt - Drehzahlabweichungen bis zu einem Promill erfaßt werden. Beim
Anspruch 9 wird die hohe zeitliche Auflösung mit
Hilfe eines Timing-Generators erreicht.

Bei der Zündspannungsverlauf-Aufzeichnungsphase wird der Verlauf der Zündspannung mit hoher zeitlicher Auflösung digitalisiert, wobei jeder
Zündimpuls bzw. dessen Verlauf um etwa 450 -
500 Zeitscheiben und damit Werte zerlegt wird, die
im Speicher abgespeichert werden.Weiterhin wird
vorteilhafterweise innerhalb jeder "Zeitscheibe" ein
Minimal- und ein Maximalwert der Zündspannung
erfaßt und als Wertepaar abgespeichert, so daß
insgesamt zweimal etwa 450 Werte pro Zündspannungsimpuls abgelegt werden. Vorteilhafterweise
werden diese Minimal- /Maximalwerte auf die Spalten des Bildschirms elektronisch abgebildet und
durch senkrechte Linien ergänzt, so daß insgesamt
ein recht übersichtliches Bild des Zündspannungsverlaufes dargestellt wird.

Die Triggerung, d. h. das Startsignal für den
Schreibbeginn des Scopebildes wird immer durch
das Zündsignal des ersten Zylinders initiiert. Wenn
nun das Beschreiben des Scopespeichers von der
Triggerung abhängig wäre, würde bei einem zeitweisen Ausfall derselben - z. B. durch eine Zündstörung - auch das fehlerhafte Ereignis nicht aufgezeichnet. Da aber gerade fehlerhafte Signale von
vorrangigem Interesse sind, wird ein besonderes
Verfahren angewandt, um das Einbringen solcher
Signale in den Scopespeicher sicherzustellen. Aus
vorgenanntem Grunde ist das Beschicken des Scopespeichers unabhängig von der Triggerung und
der Bildausgabe.

Der Speicher wird ständig mit den Ereignisinformationen (Zündungsbildern) beschickt, wobei
das jeweils zeitlich älteste Ereignis wieder ausgespeichert wird, wenn die Speicherkapazität überschritten wird, d. h. der Speicher überläuft.

Beim Drücken einer Taste "Speichern" wird
die Informationsausgabe von einem die Speicherbereichsverwaltung vornehmenden DMA- Controler
an den Scopespeicher unterbrochen, so daß dessen Informationsgehalt unverändert stehenbleibt.
Dieser Inhalt des Scopespeichers steht nun der
Haupt-CPU zur weiteren Verarbeitung zur Verfügung und kann über einen Bildschirmprozessor an
den Bildschirm einzelbildweise ausgegeben werden. Die Ausgabe der gespeicherten Bilder an den
Bildschirm wird nach folgendem Verfahren vollzogen:

- Bei Bildern, zu denen eine Adresse (eine Art
  Ordnungsnummer) im DMA-Controler vorliegt, wird diese Adresse zur Berechnung des
  Bildanfanges benutzt;
- falls hingegen im erwarteten Bereich keine
  DMA-Adresse vorhanden ist (z. B. infolge einer Zündstörung) wird aus den Bilddaten das Triggerereignis rekonstruiert und dann zur
Berechnung des Bildanfanges herangezogen.

Auf diese Weise ist sichergestellt, daß in jedem
gespeicherten Bild das Triggerereignis (z. B. Zündungsbild des 1. Zylinders) am Anfang des Bildes,
d. h. an dessen linken Bildrand steht.

Da das Triggersignal zeitabhängig verarbeitet
wird, erhält die zentrale Prozessoreinheit vom
Timing-Generator eine Information, wann ein Triggerzeitpunkt erreicht ist. Wenn dies der Fall ist,
wird der Augenblickszustand des DMA-Controlers
in den Speicher übernommen. Nach Durchführung
eines internen Rechen- und Aufbereitungsvorganges wird die Anfangsadresse des an den Bildschirmprozessor zu übertragenden Speicherbereiches festgelegt. Durch diesen Vorgang wird erreicht, daß das zur Triggerung führende Ereignis
selbst auf dem Bildschirm erscheint und nicht verloren geht.

Die vorbeschriebenen Verfahren (hierzu wird
insbesondere auf die Ansprüche 1 und 9 verwiesen) zur selektiven Erfassung und Auswertung bereits in der Vergangenheit liegender
Drehzahlwerte/Zylinder einerseits und zur selektiven Erfassung und Auswertung bereits in der Vergangenheit liegender
Zündspannungsverläufe/Zylinder mit hoher Auflösung andererseits können zwar jeweils für sich
angewandt werden, ergänzen sich aber im Sinne
der Aufgabenstellung dadurch, daß gemäß Anspruch 13 die Kombination eines Verfahrens nach
einem der Ansprüche 1 bis 8 mit einem Verfahren
nach einem der Ansprüche 9 bis 12 vorgesehen ist
zu einem Gesamtverfahren, mit welchem die Bedienungsperson in die Lage versetzt wird, eine
wirklich umfassende Laufzustandsanalyse an Verbrennungsmotoren vorzunehmen. Stellt sie z.B. anhand der selektiven Drehzahl/Zylinder-Aufzeichnungen fest, daß ein bestimmter Zylinder die Drehzahlschwankung verursacht, so wird sie in einem weiteren Schritt die abgespeicherten Zündspannnungsverläufe dieses einen Zylinders abfragen und dabei
feststellen können, ob die Drehzahlschwankung
beispielsweise auf einem Zündspannungseinbruch
basierte. Wird beim Sichten der
Zündspannungsverläufe/Zylinder allerdings festgestellt, daß keine Zündspannungseinbrüche vorlagen, so kann gezielt nach anderen Fehlerquellen
(beispielsweise mechanischen Fehlern in Zylinderkopf oder Ventilbereich) geforscht werden und dabei das eine und/oder andere Testverfahren zur
laufenden Kontrolle des Laufzustandes des Motors
wiederholt werden.

Weitere Vorteile und Merkmale der Erfindung
sind, wie eingangs angegeben, allen weiteren Unteransprüchen zu entnehmen.

Die Erfindung ist anhand von Ausführungsbeispielen in den Figuren der Zeichnung näher erläutert. Es zeigen:

Fig. 1 ein Blockschaltbild einer Vorrichtung zur Erfassung der Drehzahl/Zylinder,

Fig. 2 eine graphische Darstellung (Stehbild) der ausgewerteten Drehzahl/Zylinderwerte,

Fig. 3 ein Blockschaltbild einer Vorrichtung zur Auswertung des Zündspannungsimpulsverhaltens,

Fig. 4 die Umsetzung des Zündspannungsverlaufes (Teilfigur a) über digitalisierte Min./Max.-Wertepaare (Teilfigur b) in die zugehörige graphische Darstellung (Teilfigur c).

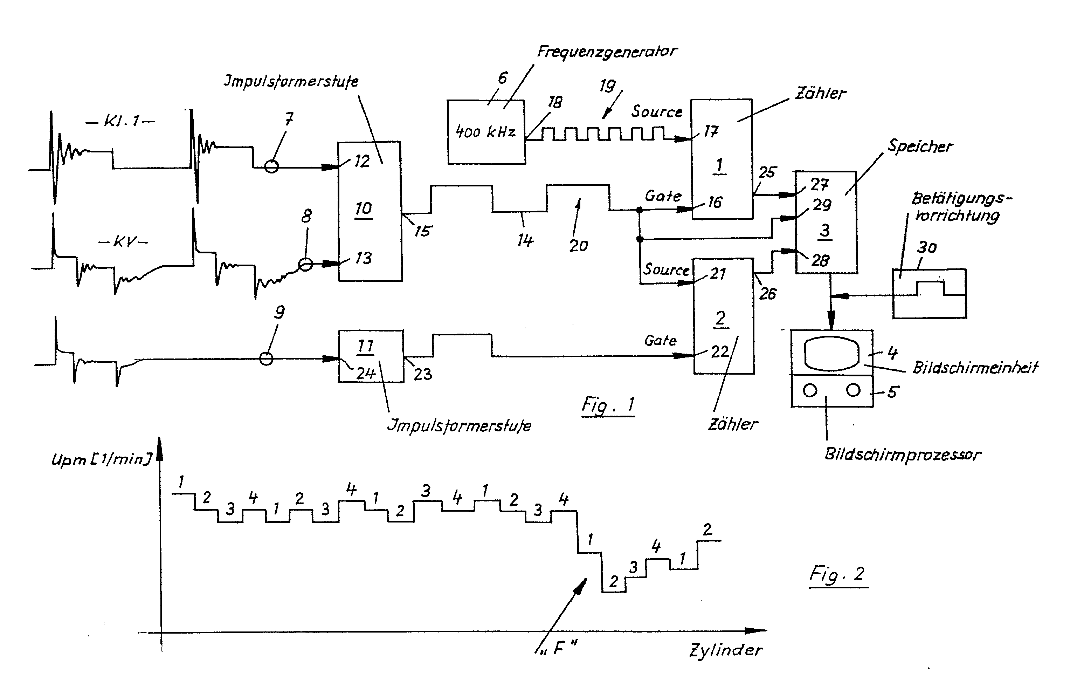

Die in Figur 1 schematisch und vereinfacht dargestellte Vorrichtung besteht i. w. aus einem Zähler 1, einem weiteren Zähler 2, einem Speicher 3, einer dem Speicher 3 nachgeschalteten Bildschirmeinheit 4 mit zugehörigem Bildschirmprozessor 5, einem Frequenzgenerator 6, Sensoren 7, 8, 9 sowie diesen nachgeschaltete Impulsformerstufen 10, 11.

Diese Elemente sind wie folgt miteinander verschaltet: Die Sensoren 7, 8 sind mit den Eingängen 12, 13 der Impulsformerstufe 10 verbunden, die aus den Eingangssignalen (Klemme 1-Signal dem Hochspannungssignal "kV") für den Zähler 1 verwertbare Rechteckimpulse formt. Die Rechteckimpulse werden durch die Leitung 14 vom Ausgang 15 an den Start-Stop-Reset-Eingang 16 des ersten Zählers übertragen. Der Zähleingang 17 des Zählers 1 ist mit dem Ausgang 18 des Frequenzgenerators 6 verbunden, so daß die Folge von Rechteckimpulsen 19 mit einer Frequenz von 400 kHz solange in den Zähleingang 17 eingezählt werden, wie durch einen Impuls 20 vom Ausgang 15 der Impulsformerstufe 10 der Start-Stop-Reset-Eingang 16 des Zählers 1 in Zählstellung gehalten ist. Mit anderen Worten wird in den Zähleingang 17 des Zählers 1 während der Zeitdauer zwischen zwei vom Sensor 7 oder 8 abgefragten Spannungsimpulsen eine entsprechende Vielzahl von Rechteckimpulsen 19 eingezählt, die der Zeitdauer zwischen zwei vom Sensor 7 oder 8 abgefragten Impulsen proportional ist.

Der Zähleingang 21 des Zählers 2 ist ebenfalls mit dem Ausgang 15 der Impulsformerstufe 10 verbunden. Der Start-Stop-Reset-Eingang 22 des Zählers 2 ist an den Ausgang 23 der zweiten Impulsformerstufe 11 angeschlossen, deren Eingang 24 mit dem Sensor 9 verbunden ist, der mit dem Zündkabel eines ausgewählten Zylinders, beispielsweise dem ersten Zylinder zusammenwirkt. Somit wird der zweite Zähler 2 bei jedem Impuls am Sensor 7 oder 8 um "1" hochgezählt, bis er über den Start-Stop-Reset-Eingang 22 bei Auftreten eines Impulses am Sensor 9 auf "1" zurückgesetzt wird und erneut zu zählen beginnt. Der jeweils im Zähler 2 vorliegende Zählerstand beinhaltet eine Zylinderkennung (beispielsweise Werte 1 - 6 bei einem Sechszylindermotor), die der Drehzahlinformation, die im Zähler 1 enthalten ist, in einem nicht näher dargestellten Prozessor zugeordnet wird und diese dann als Wertepaar im Speicher 3 abgelegt werden, wozu die Ausgänge 25 und 26 mit den Eingängen 27, 28 des Speichers 3 verbunden sind. Die Übernahme der hochgezählten Werte der Zähler in den Speicher 3 geschieht immer dann, wenn am Setzeingang 29 des Speichers 3 ein Setzbefehl vorliegt, der vom Ausgang 15 der ersten Impulsformerstufe abgeleitet wird.

Über eine manuelle Betätigungsvorrichtung 30 kann der Zähl- und Speichervorgang eingefroren werden und der Inhalt des Speichers sukzessive abgefragt werden und erscheint auf der Bildschirmeinheit 4 als Stehbild, wie es in Figur 2 dargestellt ist. Das Stehbild zeigt die Drehzahl pro Zylinder in beliebigen Einheiten als stufenförmige Linie, die in Vorwärts- oder Rückwärtsrichtung (zeitlich gesehen) abgetastet werden kann, bis die Bedienungsperson den beispielsweise durch Schütteln des Motors vorher festgestellten Drehzahlabfall auf der Kurve gefunden hat, der sich als ein Einbruch in der ansonsten relativ konstant verlaufenden Darstellung zeigt. Im vorliegenden Fall war der Zylinder 1 für die Drehzahlschwankung verantwortlich (Stelle "F" in Figur 2).

Zu Figur 1 gilt es noch anzumerken, daß zur Speicheradressenverwaltung, Umrechnung der Signale u. dgl. mehr weitere Bauelemente, beispielsweise eine zentrale Prozessoreinheit u. dgl. vorhanden sein müssen, die aus Vereinfachungsgründen nicht näher dargestellt sind, dem Durchschnittsfachmann aber in Kenntnis der Erfindung geläufig sind.

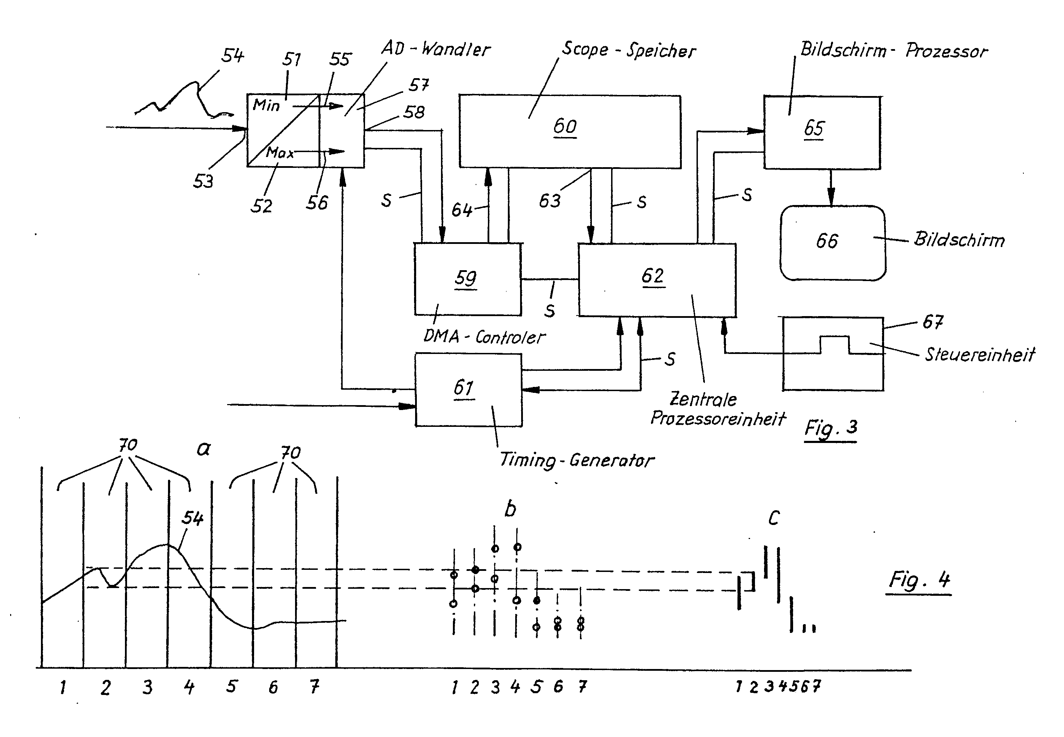

Die in Figur 3 dargestellte, zur zeitlich verzögerten Analyse des Zündspannungsverlaufes dienende Vorrichtung besteht i. w. aus zwei analogen Spitzenwertspeichern 51 , 52, auf deren gemeinsamen Eingang 53 ein den Zündspannungsverlauf 54 darstellendes Eingangssignal gelegt ist und deren Ausgänge 55, 56 mit einem Analog-Digital-Wandler 57 verbunden sind. Dessen Ausgang 58 ist mit einer Adressiervorrichtung (DMA-Controler 59) verschaltet, der zur fortlaufenden Adressierung oder Speicherbereichsverwaltung eines Speichers (Scope-Speicher 60) dient. Ferner ist zur zeitlich gesteuerten Abfrage der vom Analog-Digital-Wandler 57 gelieferten Werte sowie deren nacheinander abfolgender Speicherung im Speicher 60 ein drehzahlabhängiger Impulsgenerator (Timing-generator 61) vorgesehen, der für jeden Zündspannungsimpuls eine Vielzahl von Abfrage- und Steuerungsimpulsen an die mit ihm verbundenen Einheiten, nämlich den Analog-Digital-Wandler 57 sowie eine zentrale Prozessoreinheit 62 abgibt. Die zentrale Prozessoreinheit ist mit einem Ausgang 63 des Scope-Speichers 60 verbunden, um die vom Analog-Digital-Wandler 57 gelieferten, vom DMA-Controler 59 in den Scope-Speicher über die Leitung 64 eingelesenen, den Zündspannungsverlauf als Vielzahl von Wertepaaren darstellenden Werte über eine Bildschirmprozessoreinheit 65 auf den Bildschirm 66 zu übertragen.

Die weiteren in Figur 3 dargestellten, mit "S" bezeichneten Leitungen sind Steuerleitungen und dienen zur Sychronisation der unterschiedlichen Einheiten.

Figur 4 zeigt in den Teilfiguren 4 a - c, in welcher Weise das den Zündspannungsverlauf 54 darstellende Signal aufbereitet wird. Zunächst wird durch den Timing-Generator 61 das Zündspannungssignal 54 in sog. Zeitscheiben 70 zerlegt, und zwar in genau 448 solcher Zeitscheiben. Innerhalb jeder Zeitscheibe wird vom jeweiligen Spitzenwertspeicher 51 oder 52 der minimale und maximale Wert abgetastet und festgehalten, was in Teilfigur b) entsprechend dem Zündspannungsverlauf 54 in Teilfigur a) als Punktepaare/Zeitscheibe 70 verdeutlicht ist. Diese Min./Max.-Werte werden vom AD-Wandler 57 in digitale Form gebracht, zum DMA-Controler 59 übertragen, von diesem in den Scope-Speicher 60 einsortiert und bei Bedarf - beispielsweise durch die manuelle Steuereinheit 67 - auf den Bildschirm 66 übertragen. In dem Bildschirmprozessor 65 wurden die Minimal- /Maximalwerte (Punkte in Teilfigur b) durch vertikal stehende parallele Linien miteinander verbunden, um dem Betrachter ein bequemeres Auslesen des Zündspannungsverlaufes zu ermöglichen. Die vorgenannte, manuell bedienbare Steuereinheit 67 ist zum Stoppen des Speichervorganges und gezieltem Auslesen der im Scope-Speicher 60 vorliegenden und über einen gewissen Vergangenheitszeitraum vorhandenen Informationen (Zündspannungsverlauf und zugehörige Drehzahl) mit der zentralen Prozessoreinheit CPU 62 verbunden.

Parallel kann auf dem Bildschirm auch noch eine Zylinderkennung entsprechend dem Ausführungsbeispiel in Figur 1 dargestellt werden, wenn den Zündspannungsverlauf an den Zündkabeln unterschiedlicher Zylinder abgetastet wird.

## Ansprüche

1. Verfahren zur Laufzustandsanalyse an Verbrennungsmotoren mit elektrischer Zündanlage, bei welchem die Motordrehzahl elektrisch erfaßt, aufgezeichnet und ausgewertet wird, gekennzeichnet durch folgende Verfahrensschritte:

   - die Drehzahl des Motors wird mit hoher zeitlicher Auflösung durch Messung des Zeitabstandes zweier aufeinander abfolgender Zündspannungsimpulse unterschiedlicher Zylinder als erster Zahlenwert erfaßt
   - parallel dazu wird durch Zählung der Anzahl der Zündimpulse ein die Zylinderkennung beinhaltender zweiter Zahlenwert erfaßt, wobei der zweite Zahlenwert bei Auftreten des Zündimpulses eines ausgewählten Zylinders jeweils auf '1' gesetzt wird,
   - die Werte werden in einander zugeordneter Form digital längerfristig abgespeichert und in einem Rechner in Drehzahlwerte/Zylinder umgerechnet,
   - die abgespeicherten Drehzahlwerte/Zylinder können bedarfsweise aufgerufen und dargestellt werden.

2. Verfahren nach Anspruch 1, dadurch gekennzeichnet, daß die Darstellung Drehzahlwerte/Zylinder insbesondere in zeitlicher Zündabfolge der Zylinder als elektronisch erzeugtes stehendes Bild (grafische Darstellung) ausgeführt wird das einen stufenförmigen Verlauf aufweist, bei welchem jede Stufenfläche einem bestimmten Zylinder zugeordnet ist und die Stufenhöhe den Absolutwert der Drehzahl in beliebigen Einheiten beinhaltet.

3. Verfahren nach Anspruch 1 oder 2,

   dadurch gekennzeichnet,

   daß zur Erfassung des ersten Zahlenwertes gesondert erzeugte hochfrequente Zählimpulse mit konstanter Frequenz zwischen einem Zähler-Start und einem Zähler-Stop-Signal in einen Zähler eingezählt werden, wobei das Zähler-Start-Stop-Signal aus einer definierten Flanke, beispielsweise Anstiegsflanke, der für die Gesamtheit der Zylinder erzeugten Zündspannungsimpulse abgeleitet wird.

4. Verfahren nach Anspruch 3,

   dadurch gekennzeichnet,

   daß zur Erfassung des die Zylinderkennung beinhaltenden zweiten Zahlenwertes die Zählimpulse aus dem Start-Stop-Signal abgeleitet und in einen zweiten Zähler eingezählt werden und ein Start-Stop-Reset-Impuls des zweiten Zählers aus dem Zündspannungsimpuls nur eines ausgewählten Zylinders abgeleitet wird.

5. Verfahren nach Anspruch 3,

dadurch gekennzeichnet,

daß die konstante Frequenz der gesondert erzeugten Zählimpulse größer als 100 kHz, vorzugsweise etwa 400 kHz oder größer ist.

6. Verfahren nach einem der vorhergehenden Ansprüche,

dadurch gekennzeichnet,

daß an jeder Flanke des Zündspannungsimpulses der im ersten Zähler aufgelaufene Zahlenwert in einen Speicher übernommen und dort über einen Mindestzeitraum von mehreren Minuten zur manuellen Einleitung der Stehbilderzeugung vorliegt.

7. Verfahren nach einem der vorhergehenden Ansprüche,

dadurch gekennzeichnet

daß durch manuelle Einwirkung der graphisch dargestellte Speicherinhalt zu immer weiter zurückliegenden Drehzahlereignissen/Zylindern zurückgeschoben wird.

8. Verfahren nach einem der vorhegehenden Ansprüche,

dadurch gekennzeichnet

daß das Stehbild ausgedruckt wird.

9. Verfahren zur Laufzustandsanalyse an Verbrennungsmotoren mit elektrischer Zündanlage,

dadurch gekennzeichnet

daß zur Erfassung von fehlerhaften Zündfolgen und/oder etwaigen Zündaussetzern der zeitliche Verlauf der Zündspannung erfaßt und abgespeichert wird, wobei der Verlauf der Zündspannung bei jedem Zündimpuls mit hoher zeitlicher Auflösung digitalisiert und als Gruppe von ersten Zahlenwerten zeitlich geordnet registriert wird,

parallel dazu durch Zählung der Anzahl der Zündimpulse ein die Zylinderkennung beinhaltender zweiter Zahlenwert erfaßt wird, wobei der zweite Zahlenwert bei Auftreten des Zündimpulses eines ausgewählten Zylinders jeweils auf '1' gesetzt wird,

den Gruppen von ersten Zahlenwerten werden die zweiten Zahlenwerte rechnerisch zugeordnet und beide gruppen werden längerfristig abgespeichert,

der Verlauf der durch die ersten Zahlenwerte repräsentierten Zündspannung/Zylinder kann bedarfsweise aufgerufen und zusammen mit der zugehörigen Zylinderkennung dargestellt werden.

10. Verfahren nach Anspruch 9,

dadurch gekennzeichnet,

daß der Verlauf der durch die ersten Zahlenwerte repräsentierten Zündspannung/Zylinder als elektronisch erzeugtes Stehbild graphisch dargesteslit und/oder ausgedruckt wird.

11. Verfahren nach Anspruch 10,

dadurch gekennzeichnet,

daß die Dauer eines jeden Zündspannungsimpulses in äquidistante Zeitintervalle aufgeteilt wird, in jedem Zeitintervall ein maximaler und ein minimaler Zündspannungswert in digitaler Form ermittelt wird und die graphische Darstellung parallel nebeneinanderliegendevertikale Balken oder Linien zeigt, die zwischen den ermittelten und dargestellten minimalen und maximalen Spannungswerten verlaufen.

12. Verfahren nach einem der Ansprüche 9 - 11,

dadurch gekennzeichnet,

daß durch manuelle Einwirkung der graphisch dargestellte Speicherinhalt zu immer weiter zurückliegenden Zündereignissen zurückgeschoben wird.

13. Verfahren, gekennzeichnet durch die Kombination eines Verfahrens nach einem der Ansprüche 1 bis 8 mit einem Verfahren nach einem der Ansprüche 9 bis 12.

14. Vorrichtung zur Durchführung des Verfahrens nach einem der Ansprüche 1 bis 13, dadurch gekennzeichnet, daß ein erster und ein zweiter Zähler (1, 2) vorgesehen sind, der Zähleingang (17) des ersten Zählers (1) mit dem Ausgang (18) eines Frequenzgenerators (6) und der Start-Stop-Reset-Eingang (16) (Gate) des ersten Zählers (1) sowie der Zähleingang (21) des zweiten Zählers (2) mit einem mit der Zündspule zusammenwirkenden ersten Spannungssensor (7, 8) verbunden sind und der Start-Stop-Reset-Eingang (22) (Gate) des zweiten Zählers mit einem weiteren Sensor (9) verbunden ist, der mit dem Zündkabel eines ausgewählten Zylinders zusammenwirkt, wobei bevorzugt Mittel zur Erzeugung eines elektronischen Stehbildes vorgesehen sind.

15. Vorrichtung nach Anspruch 14, dadurch gekennzeichnet, daß die Zählerausgänge (25, 26) mit einem Eingang (27, 28) eines nachgeordneten Speichers (3) zur längerfristigen Speicherung der aus den Inhalten der Zähler (1, 2) gebildeten Wertepaare verbunden sind, dessen Setz-Eingang (29) mit dem ersten Sensor (7, 8) verbunden ist.

16. Vorrichtung nach einem der Ansprüche 14 oder 15, dadurch gekennzeichnet, daß den Sensoren (7, 8, 9) Impulsformerstufen (10, 11) nachgeschaltet sind.

17. Vorrichtung nach einem der Ansprüche 14 bis 16, dadurch gekennzeichnet, daß der Speicher (3) als Schieberegister ausgebildet ist.

18. Vorrichtung zur Durchführung des Verfahrens nach einem der Ansprüche 9 bis 12 mit einem Bildschirm (66) sowie diesem vorgeschalteter Elektronik (65) zur Erzeugung eines elektronischen Stehbildes des Zündspannungsverlaufes (54), dadurch gekennzeichnet,
- daß ein den Zündspannungsverlauf (54) wiedergebendes Eingangssignal auf die Eingänge (53) zweier analoger Spitzenwertspeicher (51, 52) gelegt ist, deren Ausgänge (55, 56) mit einem AD-wandler (57) verbunden sind, dem ein Speicher (60) mit einer Adressiervorrichtung (59) zur fortlaufenden Adressierung oder Speicherbereichsverwaltung nachgeschaltet ist,
- ferner zur zeitlich gesteuerten Abfrage der vom Ad-Wandler (59) gelieferten Werte sowie deren nacheinander abfolgende Speicherung im Speicher (60) ein drehzahlabhängiger Impulsgenerator (61) vorgesehen ist, der für jeden Zündspannungsimpuls eine Vielzahl von Abfrage- und Steuerungsimpulsen an die mit ihm verbundenen Einheiten (57,62,59) abgibt, wobei die Anzahl der Zündspannungsimpulse als Drehzahlinformation den den Zündspannungsverlauf enthaltenden Informationen zugeordnet und mit diesen zusammen im Speicher (60) abgelegt werden, sowie
- eine zentrale Prozessoreinheit (62) mit einem Ausgang des Impulsgenerators (61) und dem Ausgang (63) des Speichers (60) verbunden ist, deren Datenausgang mit einer Bildschirmeinheit (65,66) verbunden ist.

19. Vorrichtung nach Anspruch 18, dadurch gekennzeichnet, daß mit der zentralen Prozessoreinheit (62) eine manuell bedienbare Steuereinheit (67) zum Stoppen des Speichervorganges und gezieltem Auslesen der im Speicher (60) vorliegenden und über einen gewissen Vergangenheitszeitraum vorhandenen Informationen verbunden ist.

## Claims

1. Method for the running state analysis of internal combustion engines with electrical ignition system, in which method the rotational engine speed is electrically detected, recorded and evaluated, characterised by the following method steps:
   - the rotational speed of the engine is detected as first numerical value with high time resolution by measurement of the time spacing of two successive ignition voltage pulses of different cylinders,
   - a second numerical value containing the cylinder identification is detected in parallel therewith by counting the number of the ignition pulses, wherein the second numerical vlaue is set to "1" on each occurrence of the ignition pulses of a selected cylinder,
   - the values are stored for a longer term digitally in mutually associated form and converted in a computer into rotational speed values and cylinders and
   - the stored rotational speed values and cylinders can be called up and displayed as needed.

2. Method according to claim 1, characterised thereby, that the display of rotational speed values and cylinders is performed in particular in the time sequence of the ignition of the cylinders as electronically produced still image (graphic display), which displays a step-shaped course, in which each step surface is associated with a certain cylinder and the step height contains the absolute value of the rotational speed in desired units.

3. Method according to claim 1 or 2, characterised thereby, that for the detection of the first numerical value, separately generated high-frequency counting pulses at constant frequency are counted into a counter between a counter-start signal and a counter-stop signal, wherein the counter-start signal is derived from a defined edge, for example the rising edge, of the ignition voltage pulses generated for the totality of the cylinders.

4. Method according to claim 3, characterised thereby, that for the detection of the second numerical value containing the cylinder identification, the counting pulses are derived from the start-stop signal and counted into a second counter and a start-stop-reset pulse of the second counter is derived from the ignition voltage pulse of only one selected cylinder.

5. Method according to claim 3, characterised thereby, that the constant frequency of the separately generated counting pulses is greater than 100 kilohertz, preferably about 400 kilohertz or greater.

6. Method according to one of the preceding claims, characterised thereby, that the numerical value run up in the first counter at each edge of the ignition voltage pulse is taken over into a store and present there for a minimum time span of several minutes for the manual initiation of the production of the still image.

7. Method according to one of the preceding claims, characterised thereby, that the graphically displayed store content is pushed back by manual action to rotational speed events and cylinders lying ever further back.

8. Method according to one of the preceding claims, characterised thereby, that the still image is printed out.

9. Method for the running state analysis of internal combustion engines with electrical ignition system, characterised thereby, that for the detection of faulty ignition sequences and/or possible misfiring, the temporal course of the ignition voltage is detected and stored, wherein the course of the ignition voltage is digitalised with high time resolution for each ignition pulse and recorded, ordered in time, as group of first numerical values, a second numerical value containing the cylinder identification is detected in parallel therewith by counting the number of the ignition pulses, wherein the second numerical value is set to "1" on each occurrence of the ignition pulses of a selected cylinder, the second numerical values are associated by computation with the groups of first numerical values, both groups are stored for a longer term and the course of the ignition voltage per cylinder represented by the first numerical values can be called up and displayed as needed together with the associated cylinder identification.

10. Method according to claim 9, characterised thereby, that the course of the ignition voltage per cylinder represented by the first numerical values is displayed graphically and/or printed out as electronically produced still image.

11. Method according to claim 10, characterised thereby, that the duration of each ignition voltage pulse is divided up into equidistant time intervals, a maximum and a minimum ignition voltage value is determined in digital form in each time interval and the graphic display shows vertical bars or lines, which lie one parallelly beside the other and extend between the ascertained and displayed minimum and maximum voltage values.

12. Method according to one of the claims 9 to 11, characterised thereby, that the graphically displayed store content is pushed back by manual action to events lying ever further back.

13. Method characterised by the combination of a method according to one of the claims 1 to 8 with a method according to one of the claims 9 to 12.

14. Device for the performance of the method according to one of the claims 1 to 13, characterised thereby, that a first counter (1) and a second counter (2) are provided, the counting input (17) of the first counter (1) is connected with the output (18) of a frequency generator (6) and the start-stop-reset input (16) (gate) of the first counter (1) as well as the counting input (21) of the second counter (2) are connected with a first voltage sensor (7, 8) cooperating with the ignition coil and the start-stop-reset input (22) (gate) of the second counter is connected with a further sensor (9), which co-operateswith the ignition cable of a selected cylinder, wherein means for the generation of an electronic still image are preferably provided.

15. Device according to claim 14, characterised thereby, that the counter outputs (25, 26) are connected with an input (27, 28) of a downstream store (3), the set-input (29) of which is connected with the first sensor (7, 8), for the longer term storage of the value pairs formed from the contents of the counters (1, 2).

16. Device according to one of the claims 14 and 15, characterised thereby, that pulse-shaping stages (10, 11) are connected behind the sensors (7, 8, 9).

17. Device according to one of the claims 14 to 16, characterised thereby, that the store (3) is constructed as shift register.

18. Device for the performance of the method according to one of the claims 9 to 12, with an image screen (66) as well as an electronic system (65) connected upstream thereof for the generation of an electronic still image of the ignition voltage course (54), characterised thereby,
- that an input signal reproducing the ignition voltage course (54) is applied to the inputs (53) of two analog peak value stores (51, 52), the outputs (55, 56) of which are connected with an analog-to-digital converter (57), behind which is connected a store (60) with an addressing device (59) for the continuous addressing or storage region management,
- a pulse generator (61), which is dependent on rotational speed and for each ignition voltage pulse delivers a plurality of interrogation and control pulses to the units (57, 62, 59) connected with it, is furthermore provided for the time-controlled interrogation of the values supplied by the analog-to-digital converter (57) as well as their successively occurring storage in the store (60), wherein the number of the ignition voltage pulses is associated as rotational speed information with the information containing the ignition voltage course and filed in the store (60) together therewith, and
- a central processor unit (62) is connected with an output of the pulse generator (61) and the output (63) of the store (60), the data output of which is connected with an image screen unit (65, 66).

19. Device according to claim 18, characterised thereby, that the central processor unit (62) is connected with a manually operable control unit (67) for the stopping of the storage operation and targeted read-out of the information data available in the store (60) and present over a certain time span of the past.

**Revendications**

1. Procédé pour l'analyse de l'état de fonctionnement de moteurs à combustion interne à allumage électrique, dans lequel la vitesse de rotation du moteur est déterminée, tracée et interprétée électriquement, caractérisé par les étapes suivantes du procédé :
- on détermine la vitesse de rotation du moteur comme première valeur numérique, avec une résolution élevée dans le temps, par mesure de l'intervalle de temps entre deux impulsions de tension d'allumage consécutives de cylindres différents,
- parallèlement à cela, on détermine, par comptage du nombre des impulsions d'allumage, une deuxième valeur numérique contenant l'identification du cylindre, la deuxième valeur numérique revenant à chaque fois à la valeur "1" lorsqu'apparaît l'impulsion d'allumage d'un cylindre choisi,
- on enregistre les valeurs, de manière digitale et sur une très longue durée, sous une forme où elles sont associées les unes aux autres, et on les convertit dans un calculateur en valeurs de vitesse de rotation par cylindre,
- on peut appeler et représenter en cas de besoin les valeurs de vitesse de rotation par cylindre qui ont été enregistrées.

2. Procédé selon la revendication 1, caractérisé par le fait que la représentation des valeurs de vitesse de rotation par cylindre est réalisée sous la forme d'une image stationnaire (représentation graphique) qui est engendrée par voie électronique, en particulier selon l'ordre d'allumage des cylindres dans le temps, et qui présente un tracé en gradins dans lequel la surface de chaque gradin est associée à un cylindre déterminé et la hauteur des gradins contient la valeur absolue de la vitesse de rotation dans des unités quelconques.

3. Procédé selon la revendication 1 ou 2, caractérisé par le fait que, pour déterminer la première valeur numérique, on compte dans un compteur des impulsions de comptage à haute fréquence et à fréquence constante engendrées séparément, entre un signal de départ du compteur et un signal d'arrêt du compteur, le signal de départ et d'arrêt du compteur étant déduit d'un front défini, par exemple du front montant, des impulsions de tension d'allumage engendrées pour la totalité des cylindres.

4. Procédé selon la revendication 3, caractérisé par le fait que, pour déterminer la deuxième valeur numérique qui contient l'identification du cylindre, on déduit les impulsions de comptage du signal de départ et d'arrêt et on les compte dans un deuxième compteur, et on déduit une impulsion de départ, d'arrêt et de remise à zéro du deuxième compteur à partir de l'impulsion de tension d'allumage d'un seul cylindre choisi.

5. Procédé selon la revendication 3, caractérisé par le fait que la fréquence constante des impulsions de comptage engendrées séparément est supérieure à 100 kHz, et de préférence égale à 400 kHz environ ou plus.

6. Procédé selon l'une des revendications précédentes, caractérisé par le fait que, sur chaque front de l'impulsion de tension d'allumage, on transfère la valeur numérique totalisée dans le premier compteur dans une mémoire où elle est présente, sur une durée minimale de plusieurs minutes, pour le déclenchement manuel de la génération de l'image stationnaire.

7. Procédé selon l'une des revendications précédentes, caractérisé par le fait que l'on repousse par action manuelle le contenu de la mémoire représenté graphiquement vers des évènements concernant la vitesse de rotation par cylindre qui sont toujours plus reculés.

8. Procédé selon l'une des revendications précédentes, caractérisé par le fait que l'on imprime l'image stationnaire.

9. Procédé pour l'analyse de l'état de fonctionnement de moteurs à combustion interne à allumage électrique, caractérisé par le fait que, pour détecter des ordres d'allumage incorrects et/ou d'éventuels ratés d'allumage, on détermine et on met en mémoire la courbe de la tension d'allumage en fonction du temps, cependant que l'on numérise la courbe de la tension d'allumage pour chaque impulsion d'allumage avec une résolution élevée dans le temps, et qu'on l'enregistre de manière ordonnée dans le temps sous la forme d'un groupe de premières valeurs numériques, parallèlement à cela, on détermine, par comptage du nombre des impulsions d'allumage, une deuxième valeur numérique contenant l'identification du cylindre, la deuxième valeur numérique revenant à chaque fois à la valeur "1" lorsqu'apparaît l'impulsion d'allumage d'un cylindre choisi, on associe par le calcul les deuxièmes valeurs numériques aux groupes de premières valeurs numériques, et on met en mémoire les deux groupes sur une très longue durée, on peut appeler en cas de besoin la courbe de la tension d'allumage par cylindre représentée par les premières valeurs numériques et la représenter en même temps que l'identification du cylindre qui lui est associée.

10. Procédé selon la revendication 9, caractérisé par le fait que l'on représente graphiquement sous la forme d'une image stationnaire engendrée par voie électronique et/ou que l'on imprime la courbe de la tension d'allumage par cylindre représentée par les premières valeurs numériques.

11. Procédé selon la revendication 10, caractérisé par le fait que l'on divise en intervalles de temps équidistants la durée de chaque impulsion de tension d'allumage, que l'on détermine dans chaque intervalle de temps, sous forme numérique, une valeur maximale et une valeur minimale pour la tension d'allumage, et que la représentation graphique montre des barres ou des lignes verticales qui sont disposées parallèlement entre elles et qui s'étendent entre les valeurs minimales et maximales déterminées et représentées pour la tension.

12. Procédé selon l'une des revendications 9 à 11, caractérisé par le fait que l'on repousse par action manuelle le contenu de la mémoire représenté graphiquement vers des évènements concernant l'allumage qui sont toujours plus reculés.

13. Procédé caractérisé par la combinaison d'un procédé selon l'une des revendications 1 à 8 avec un procédé selon l'une des revendications 9 à 12.

14. Dispositif pour la mise en oeuvre du procédé selon l'une des revendications 1 à 13, caractérisé par le fait qu'il est prévu un premier compteur et un deuxième compteur (1, 2) que l'entrée de comptage (17) du premier compteur (1) est reliée à la sortie (18) d'un générateur de fréquence (6), que l'entrée de départ, d'arrêt et de remise à zéro (16) (porte) du premier compteur (1), de même que l'entrée de comptage (21) du deuxième compteur (2), sont reliées à un premier capteur de tension (7, 8) coopérant avec la bobine d'allumage, et que l'entrée de départ, d'arrêt et de remise à zéro (22) (porte) du deuxième compteur est reliée à un autre capteur (9) qui coopère avec le câble d'allumage d'un cylindre choisi, des moyens étant prévus de préférence pour engendrer une image électronique stationnaire.

15. Dispositif selon la revendication 14, caractérisé par le fait que les sorties de comptage (25, 26) sont reliées à une entrée (27, 28) d'une mémoire (3) qui est montée en aval en vue de la mise en mémoire sur une très longue durée des paires de valeurs formées à partir des contenus des compteurs (1, 2) et dont l'entrée de pilotage (29) est reliée au premier capteur (7, 8).

16. Dispositif selon l'une des revendications 14 ou 15, caractérisé par le fait que des étages de mise en forme des impulsions (10, 11) sont montés en aval des capteurs (7, 8, 9).

17. Dispositif selon l'une des revendications 14 à 16, caractérisé par le fait que la mémoire (3) est réalisée sous la forme d'un registre à décalage.

18. Dispositif pour la mise en oeuvre du procédé selon l'une des revendications 9 à 12, comprenant un écran cathodique (66), ainsi qu'une électronique (65) montée en amont de celui-ci pour engendrer une image électronique stationnaire de la courbe (54) de la tension d'allumage, caractérisé par le fait :
   - qu'un signal d'entrée reproduisant la courbe (54) de la tension d'allumage est appliqué aux entrées (53) de deux mémoires analogiques à valeurs de crête (51, 52) dont les sorties (55, 56) sont reliées à un convertisseur analogique-numérique (57) en aval duquel est montée une mémoire (60) munie d'un dispositif d'adressage (59) pour l'adressage continu ou la gestion des zones de mémoire,
   - qu'il est prévu en outre, pour l'interrogation commandée dans le temps des valeurs fournies par le convertisseur analogique-numérique (57), ainsi que pour leur enregistrement successif dans la mémoire (60), un générateur d'impulsions (61) qui dépend de la vitesse de rotation et qui fournit, pour chaque impulsion de tension d'allumage, une pluralité d'impulsions d'interrogation et de commande aux unités qui lui sont reliées (57, 62, 59), le nombre des impulsions de tension d'allumage étant associé sous la forme d'information sur la vitesse de rotation aux informations qui contiennent la courbe de la tension d'allumage, et fourni à la mémoire (60) en même temps que celles-ci, et :

   - qu'une unité de traitement centrale (62) est reliée à une sortie du générateur d'impulsions (61) et à la sortie (63) de la mémoire (60) dont la sortie des données est reliée à une unité à écran cathodique (65, 66).

19. Dispositif selon la revendication 18, caractérisé par le fait qu'est reliée à l'unité de traitement centrale (62) une unité de commande à actionnement manuel (67) destinée à arrêter le processus de mise en mémoire et à extraire de manière appropriée les informations qui sont contenues dans la mémoire (60) et qui sont présentes sur une certaine durée dans le passé.

Fig. 1

Fig. 2

Fig. 3

- 54
- 51  55
- AD - Wandler
- Scope - Speicher
- Bildschirm - Prozessor
- 57
- Min
- 58
- 65
- 53
- Max
- 60
- 56
- S
- 52
- 64
- 63
- S
- S
- 66  — Bildschirm
- 59
- 62
- DMA - Controler
- S
- 67
- Steuereinheit
- S
- 61
- Zentrale
- Prozessoreinheit
- Timing - Generator

*Fig . 3*

70   *a*   70

54

1  2  3  4  5  6  7

*b*

1 2 3 4 5 6 7

*c*

1 2 3 4 5 6 7

*Fig . 4*